# EUROPÄISCHE PATENTANMELDUNG

(11) **EP 3 142 228 A1**
(43) Veröffentlichungstag der Anmeldung: **15.03.2017**
(21) Anmeldenummer: 15184675.5
(22) Anmeldetag: 10.09.2015
(51) Int. Cl.: H02K 3/14

(54) **STATOR FÜR EINE ELEKTRISCHE MASCHINE, ELEKTRISCHE MASCHINE SOWIE HERSTELLUNGSVERFAHREN**

(71) Anmelder: Siemens Aktiengesellschaft, 80333 München (DE)
(72) Erfinder: Bernhardt, Michael, 97616 Bad Neustadt (DE); Fritsch, Daniel, 97616 Bad Neustadt (DE); Müller, Michael, 97688 Bad Kissingen (DE)

(57) **Zusammenfassung**

Die Erfindung betrifft einen Stator (2) für eine elektrische Maschine (1) mit einem Statorträger (5), welcher eine Mehrzahl von Nuten (N1 bis N48) mit einem jeweiligen Nutboden (6) aufweist, und einer Motorwicklung (8), welche zumindest einen ersten Strang (9) aufweist, wobei dem ersten Strang (9) eine vorbestimme Anzahl von ersten Nuten der Mehrzahl von Nuten (N1 bis N48) zugeordnet ist, jeweils zumindest ein Windungsabschnitt (13) des ersten Strangs (9) in jede der ersten Nuten eingebracht ist, der erste Strang (9) eine Mehrzahl von elektrisch parallel geschalteten Einzeldrähten (14) aufweist, welche jeweils als Runddraht ausgebildet sind, und zumindest einige der Einzeldrähte (14) in jedem der Windungsabschnitte (13) in radialer Richtung (r) des Stators (2) übereinander angeordnet sind, und wobei die Windungsabschnitte (13) jeweils derart in den ersten Nuten angeordnet sind, dass ein mittlere radialer Abstand (m) der Einzeldrähte (14) zu dem Nutboden (6) für alle Einzeldrähte (14) gleich ist.

## Beschreibung

Die vorliegende Erfindung betrifft einen Stator für eine elektrische Maschine mit einem Statorträger, welcher eine Mehrzahl von Nuten mit einem jeweiligen Nutenboden aufweist, und mit einer Motorwicklung, welche zumindest einen ersten Strang aufweist, wobei dem ersten Strang eine vorbestimmte Anzahl von ersten Nuten der Mehrzahl von Nuten zugeordnet ist, jeweils zumindest ein Windungsabschnitt des ersten Strangs in jede der ersten Nuten eingebracht ist, der erste Strang eine Mehrzahl von elektrisch parallel geschalteten Einzeldrähten aufweist, welche jeweils als Runddraht ausgebildet sind, und zumindest einige der Einzeldrähte in jedem der Windungsabschnitte in radialer Richtung des Stators übereinander angeordnet sind. Zudem betrifft die vorliegende Erfindung eine elektrische Maschine mit einem derartigen Stator und einem Rotor. Schließlich betrifft die vorliegende Erfindung ein Verfahren zum Herstellen eines Stators für eine elektrische Maschine.

Das Interesse richtet sich vorliegend auf Statoren für elektrische Maschinen, insbesondere Wechsel- und Drehstrommotoren. Derartige Statoren weisen einen Statorträger bzw. ein Blechpaket auf, in welchen bzw. in welches eine Mehrzahl von Nuten eingebracht ist. Zudem umfasst der Stator eine Motorwicklung, welche beispielsweise mehrere Stränge aufweisen kann. Dabei kann jeder Strang einer Phase zugeordnet sein. In die jeweiligen Nuten sind Teile der Stränge bzw. der Motorwicklung eingebracht. Dabei können die Stränge insbesondere mehrere Einzeldrähte umfassen, die elektrisch parallel geschaltet sind.

Der Teil des Strangs einer Schleifen- oder Wellenwicklung, der nicht in die Nuten eingebracht ist, wird als Wickelkopf bezeichnet. Dabei wird noch zwischen dem Wickelkopf der Schaltseite und dem Wickelkopf der Nicht-Schaltseite unterschieden. Der Wickelkopf der Schaltseite beschreibt den Teil des Wickelkopfs, an dem die Schaltverbindungen und die Wicklungsenden angeordnet sind.

Insbesondere im Bereich der Elektromobilität ist es erforderlich, dass die Elektromotoren einen hohen Wirkungsgrad bereitstellen. Wenn im Betrieb der elektrischen Maschine der Rotor relativ zu dem Stator bewegt wird, ist es der Fall, dass bei steigender Speisefrequenz und/oder steigendem Speisestrom unterschiedliche Spannungen in die Einzeldrähte, die in den Nuten angeordnet sind, induziert werden. Der Grund hierfür ist, dass die Einzeldrähte üblicherweise in radialer Richtung des Stators übereinander angeordnet sind. Somit weisen die Einzeldrähte einen unterschiedlichen Abstand zu dem Rotor bzw. dem Luftspalt auf. Ferner ist das Nutquerfeld in radialer Richtung der Nut nicht konstant. Die unterschiedlichen elektrischen Spannungen, die in die Einzeldrähte in Folge der Anordnung der Einzeldrähte und der ungleichen Flussdichten induziert wird, führen zu Ausgleichsströmen innerhalb der Motorwicklung. Dieser Sachverhalt ist auch unter dem Begriff "Schlingstrom" bekannt.

Zur Vermeidung dieser Ausgleichsströme ist es insbesondere bei großen Turbogeneratoren bekannt, sogenannte Roebelstäbe zu verwenden. Ein solcher Roebelstab ist ein stabförmiger elektrischer Leiter, der mehrere parallele Teilleiter umfasst. Diese Teilleiter sind elektrisch voneinander isoliert und speziell geschichtet. Die Teilleiter sind derart verdrillt, dass jeder Teilleiter jede Position innerhalb des Stabes innerhalb einer Nut einnimmt Dabei sind die Teilleiter als Drähte mit einem rechteckigen Querschnitt ausgebildet.

Es ist Aufgabe der vorliegenden Erfindung, eine Lösung aufzuzeigen, wie eine elektrische Maschine, bei der in den Nuten des Stators Einzeldrähte übereinander angeordnet sind, zuverlässiger betrieben werden können.

Diese Aufgabe wird erfindungsgemäß durch einen Stator, eine elektrische Maschine sowie durch ein Verfahren mit den Merkmalen gemäß den jeweiligen unabhängigen Patentansprüchen gelöst. Vorteilhafte Weiterbildungen der vorliegenden Erfindung sind Gegenstand der abhängigen Patentansprüche.

Ein erfindungsgemäßer Stator für eine elektrische Maschine umfasst einen Statorträger, welcher eine Mehrzahl von Nuten mit einem jeweiligen Nutboden aufweist. Zudem umfasst der Stator eine Motorwicklung, welche zumindest einen ersten Strang aufweist. Dabei ist dem ersten Strang eine vorbestimmte Anzahl von ersten Nuten der Mehrzahl von Nuten zugeordnet. Ferner ist jeweils zumindest ein Windungsabschnitt des ersten Strangs in jede der ersten Nuten eingebracht. Der erste Strang weist ferner eine Mehrzahl von elektrisch parallel geschalteten Einzeldrähten auf, welche jeweils als Runddraht ausgebildet sind. Ferner sind zumindest einige der Einzeldrähte in jedem der Windungsabschnitte in radialer Richtung des Stators übereinander angeordnet. Darüber hinaus sind die Windungsabschnitte jeweils derart in den ersten Nuten angeordnet, dass ein mittlerer radialer Abstand der Einzeldrähte zu dem Nutboden für alle Einzeldrähte gleich ist.

In dem Statorträger des Stators sind eine Mehrzahl von Nuten eingebracht, welche beispielsweise entlang einer Umfangsrichtung des Statorträgers gleichmäßig verteilt angeordnet sein können. Die jeweiligen Nuten können sich im Wesentlichen entlang der radialen Richtung des Stators bzw. der elektrischen Maschine erstrecken. Die jeweiligen Nuten können eine Nutöffnung und einen der Nutöffnung gegenüberliegenden Nutboden aufweisen. Dabei entspricht der Nutboden insbesondere dem Bereich der Nut, der dem Rotor bzw. dem Luftspalt der elektrischen Maschine abgewandt ist. Der Statorträger kann beispielsweise aus einem entsprechenden Blechpaket gebildet sein. Die Motorwicklung des Stators weist zumindest einen Strang auf. Grundsätzlich kann es vorgesehen sein, dass die Motorwicklung mehrere Stränge aufweist, wobei jedem Strang eine Phase zugeordnet ist. Des Weiteren ist dem ersten Strang eine vorbestimmte Anzahl von ersten Nuten zugeordnet. Die Zuordnung der ersten Nuten ergibt sich aus der Ausgestaltung der elektrischen Maschine, beispielsweise aus der Polpaarzahl der elektrischen Maschine.

Der erste Strang kann nun derart ausgebildet sein, dass dieser entsprechende Windungen ausbildet, welche teilweise in zwei ersten Nuten angeordnet sind. Mehrere elektrisch verbundene Windungen, welche in radialer Richtung übereinander in einer Nut angeordnet sind, bilden eine Spule. Verbundene Spulen generieren wiederum eine Spulengruppe. Die jeweiligen Abschnitte der Windungen, die in den ersten Nuten angeordnet sind, werden als Windungsabschnitte bezeichnet. Jede Windung weist demnach zwei Windungsabschnitte auf, nämlich jeweils einen in den ihr zugeordneten ersten Nuten. Der erste Strang ist aus einer Mehrzahl von Einzeldrähten gebildet, die elektrisch parallel geschaltet sind. Die Einzeldrähte sind jeweils als Runddrähte ausgebildet. Dies bedeutet, dass die Einzeldrähte eine runde Querschnittsfläche aufweisen. Die Einzeldrähte können beispielsweise parallel zueinander angeordnet sein. Damit weisen auch die Windungsabschnitte, die in den ersten Nuten angeordnet sind, parallele Einzeldrähte auf. Darüber hinaus sind die Einzeldrähte derart in den ersten Nuten angeordnet, dass zumindest einige der Einzeldrähte in radialer Richtung übereinander bzw. hintereinander angeordnet sind. Mit anderen Worten sind einige der Einzeldrähte in radialer Richtung ausgehend von dem Nutboden hintereinander angeordnet. Diese Anordnung bewirkt, dass im Betrieb der elektrischen Maschine unterschiedliche elektrische Spannungen in die jeweiligen Einzeldrähte induziert werden. Diese induzierten Spannungen werden durch elektromagnetische Felder mit einer Frequenz größer null im laufenden Betrieb der elektrischen Maschine hervorgerufen. Da die jeweiligen Einzeldrähte in der ersten Nut einen unterschiedlichen radialen Abstand zu dem Luftspalt aufweisen und das Nutquerfeld ausgehend von dem Luftspalt zum Nutboden variiert, ergeben sich auch unterschiedliche induzierte Spannungen in den jeweiligen Einzeldrähten.

Erfindungsgemäß ist es nun vorgesehen, dass die Windungsabschnitte jeweils derart in den ersten Nuten angeordnet sind, dass ein mittlerer radialer Abstand zu dem Nutboden für alle Einzeldrähte gleich ist. Mit anderen Worten bedeutet dies insbesondere, dass die jeweiligen Windungsabschnitte in den ersten Nuten nicht immer die gleiche Anordnung zueinander aufweisen. Grundsätzlich können Einzeldrähte in den jeweiligen Windungsabschnitten unterschiedlich angeordnet sein. Dabei sind die Einzeldrähte so in den ersten Nuten angeordnet, dass ein mittlerer radialer Abstand der jeweiligen Einzeldrähte zu dem Nutboden für alle Einzeldrähte im Wesentlichen gleich ist. Beispielsweise kann ein Einzeldraht so in einer der ersten Nuten angeordnet sein, dass er einen geringen Abstand zu dem Nutboden aufweist. In einer weiteren der ersten Nuten kann dieser Einzeldraht einen verhältnismäßig großen Abstand zu dem Nutboden aufweisen. Insgesamt ist die Anordnung der Einzeldrähte so gewählt, dass die jeweiligen Abstände der Drähte zu dem Nutboden für alle Einzeldrähte im Mittel gleich sind. Somit kann erreicht werden, dass in die elektrisch parallel geschalteten Einzeldrähte des ersten Strangs im Mittel die gleiche Spannung induziert wird. Auf diese Weise kann verhindert werden, dass sich entsprechende Ausgleichsströme bzw. Schlingströme in den Einzeldrähten ausbilden. Dadurch können Verluste infolge der Ausgleichströme reduziert werden. Darüber hinaus kann vermieden werden, dass sich die Einzeldrähte in Folge der Ausgleichsströme erwärmen und somit im schlimmsten Fall beschädigt werden. Somit kann ein zuverlässiger Betrieb der elektrischen Maschine garantiert werden.

Bevorzugt sind die jeweiligen Windungsabschnitte in den ersten Nuten in eine erste Gruppe und eine zweite Gruppe eingeteilt, die Einzeldrähte der Windungsabschnitte der ersten Gruppe sind in einer ersten Reihenfolge in der radialen Richtung und die Einzeldrähte der Windungsabschnitte der zweiten Gruppe sind in einer zur ersten Reihenfolge umgekehrten, zweiten Reihenfolge angeordnet. Bevorzugt ist in der ersten Gruppe und der zweiten Gruppe die gleiche Anzahl an Windungsabschnitten enthalten. Mit anderen Worten können in einer ersten Hälfte der ersten Nuten die Einzeldrähte entlang einer ersten Reihenfolge angeordnet sein und in einer zweiten Hälfte der ersten Nuten sind die Einzeldrähte entlang der zweiten Reihenfolge angeordnet. Wenn ein Windungsabschnitt beispielsweise drei Einzeldrähte aufweist, die in radialer Richtung übereinander angeordnet sind, kann beispielsweise in der ersten Gruppe in radialer Richtung ausgehend von dem Nutboden zunächst der erste Einzeldraht angeordnet sein. Auf dem ersten Einzeldraht kann der zweite Einzeldraht angeordnet sein und auf dem zweiten Einzeldraht kann dann der dritte Einzeldraht angeordnet sein. In der zweiten Gruppe ist ausgehend von dem Nutboden zunächst der dritte Einzeldraht angeordnet. Auf dem dritten Einzeldraht ist der zweite Einzeldraht und auf dem zweiten Einzeldraht ist dann der erste Einzeldraht angeordnet. Der zweite Einzeldraht, der in der ersten und der zweiten Gruppe jeweils in der Mitte angeordnet ist, weist immer den gleichen Abstand zu dem Nutboden auf. In der ersten Gruppe ist der erste Einzeldraht direkt an dem Nutboden angeordnet. In der zweiten Gruppe ist der erste Einzeldraht am weitesten entfernt von dem Nutboden angeordnet. Somit ergibt sich für den ersten Draht als mittlerer Abstand auch die Position des mittleren, zweiten Einzeldrahts. Dies gilt in gleicher Weise für den dritten Einzeldraht. Grundsätzlich kann jeder Windungsabschnitt auch mehrere Einzeldrähte umfassen, die in Umfangsrichtung des Stators nebeneinander angeordnet sind. Durch eine derartige Aufteilung der Windungsabschnitte in zwei Gruppen kann auf einfache Weise ein Ausgleichstrom verhindert werden.

Gemäß einer weiteren Ausführungsform weist der erste Strang zumindest einen Verdrehungsbereich auf, in welchem der erste Strang in sich um 180° gedreht ist. Im einfachsten Fall kann eine erste Hälfte der ersten Nuten der ersten Gruppe der Windungsabschnitte zugeordnet sein. In diese erste Hälfte der Nuten können die Windungsabschnitte eingebracht sein. Anschließend kann der Strang in sich um 180° gedreht werden. Danach können die Windungsabschnitte, die der zweiten Gruppe zugeordnet sind, in der zweiten Hälfte der ersten Nuten angeordnet werden. Somit kann im einfachsten Fall durch eine einmalige Drehung des ersten Strangs eine Anordnung der Einzeldrähte in den jeweiligen ersten Nuten erreicht werden, bei denen keine Ausgleichströme bewirkt werden. Grundsätzlich kann es vorgesehen sein, dass der erste Strang mehrere Verdrehungsbereiche aufweist.

In einer weiteren Ausführungsform bildet der erste Strang eine Wicklung mit einem Wickelkopf aus und der Verdrehungsbereich ist innerhalb des Wickelkopfes angeordnet. Wenn der erste Strang mehrere Verdrehungsbereiche aufweist, können diese an unterschiedlichen Positionen im Wickelkopf angeordnet sein. Im Bereich des Wickelkopfes kann die Verdrehung des ersten Strangs einfach eingebracht werden. Somit kann die Motorwicklung bzw. der erste Strang einfach hergestellt werden.

In einer weiteren Ausgestaltung weist der erste Strang zumindest zwei parallele Zweige auf und der erste Strang weist in jedem der Zweite einen Verdrehungsbereich auf. Mit anderen Worten entspricht die Anzahl der Verdrehungsbereiche pro Strang bzw. pro Phase der Anzahl der parallelen Zweige eines Strangs bzw. einer Phase. Wenn der erste Strang nur einen Zweig aufweist, ist es ausreichend, wenn der erste Strang einen Verdrehungsbereich aufweist. Falls der erste Strang mehrere parallele Zweige aufweist, ist mindestens für jeden der parallelen Zweige ein Verdrehungsbereich vorzusehen. Somit kann für jeden der parallelen Zweige ermöglicht werden, dass sich in diesem keine Ausgleichsströme ausbilden und somit die Motorwicklung beschädigt wird.

In einer Ausgestaltung weist der erste Strang eine Mehrzahl von Spulen auf, wobei jede der Spulen zumindest eine Windung aufweist, welche zwischen zwei der ersten Nuten ausgebildet ist und der Verdrehbereich ist innerhalb zumindest einer der Spulen der Mehrzahl von Spulen angeordnet. Der erste Strang kann derart ausgebildet sein, dass dieser mehrere Spulen umfasst. Dabei können die Spulen die gleiche Spulenweite aufweisen. Es kann auch vorgesehen sein, dass die Spulen eine ungleiche Weite aufweisen. In einer Ausführungsform kann dabei die Verdrehung innerhalb der Spule angeordnet sein. Dabei können die jeweiligen Windungsabschnitte zunächst in eine Nut eingebracht werden. Anschließend kann die Verdrehung des Strangs durchgeführt werden und anschließend die jeweiligen Windungsabschnitte des ersten Strangs in eine weitere Nut eingebracht werden. Dies eignet sich insbesondere wenn die Motorwicklung mittels einer Handwicklung bereitgestellt wird.

In einer weiteren Ausführungsform weist der erste Strang eine Mehrzahl von Spule auf, wobei jede der Spulen zumindest eine Windung aufweist, welche zwischen zwei der ersten Nuten ausgebildet ist und der Verdrehbereich ist zumindest zwischen zwei benachbarten Spulen der Mehrzahl der Spulen angeordnet. In diesem Fall kann die Verdrehung zwischen zwei verketteten Spulen eingebracht werden. Hierbei kann zunächst eine erste Spule gewickelt werden. Im Übergang zur benachbarten, verketteten Spule wird dann die Position der parallelen Einzeldrähte innerhalb des ersten Strangs um 180° gedreht. Dabei kann es auch vorgesehen sein, dass vor dem Übergang zur nächsten Spule nochmals eine Drehung um 180° erfolgt. Dabei kann der Verdrehbereich insbesondere in dem Spulenverbinder zwischen den zwei Spulen angeordnet sein. Ein derartiges Verfahren eignet sich insbesondere wenn die Motorwicklung als Maschinenwicklung ausgebildet ist.

Die parallelen Einzeldrähte können auch in mehrere Gruppen zusammengefasst sein und diese Gruppen können dann beispielsweise um 180° verdreht sein. Der Verdrehbereich kann dann im Bereich des Wickelkopfes angeordnet sein.

Weiterhin ist es vorteilhaft, wenn jede der Spulen eine Mehrzahl von Windungen aufweist, die in der radialen Richtung übereinander angeordnet sind. Somit bilden sich in jeder der ersten Nuten mehrere Windungsabschnitte aus, die in radialer Richtung nacheinander angeordnet sind. Insbesondere ist die Anordnung der Einzeldrähte in jedem der Windungsabschnitte gleich. Somit können auch bei einer Motorwicklung, deren Spulen mehrere Windungen aufweisen, Verlustmechanismen effektiv begrenzt werden.

Vorzugsweise ist es vorgesehen, dass die Motorwicklung einen zweiten Strang, welchem eine vorbestimmte Anzahl von zweiten Nuten der Mehrzahl von Nuten zugeordnet ist, und einen dritten Strang, welchem eine vorbestimmte Anzahl von dritten Nuten der Mehrzahl von Nuten zugeordnet ist, aufweist. Mit anderen Worten kann die Motorwicklung drei Stränge aufweisen, wobei jedem der Stränge eine Phase zugeordnet ist. Dabei sind jedem Strang entsprechende Nuten der Mehrzahl von Nuten zugeordnet.

Eine erfindungsgemäße elektrische Maschine umfasst einen erfindungsgemäßen Stator. Zudem umfasst die elektrische Maschine einen Rotor. Der Rotor ist insbesondere innerhalb des Stators angeordnet und kann relativ zu dem Stator gedreht werden. Bei der elektrischen Maschine kann es sich beispielsweise um eine Asynchronmaschine, eine Synchronmaschine, eine permanenterregte Synchronmaschine, eine synchrone Reluktanzmaschine oder dergleichen handeln.

Ein erfindungsgemäßes Verfahren dient zum Herstellen eines Stators einer elektrischen Maschine. Das Verfahren umfasst das Bereitstellen eines Statorträgers, welcher eine Mehrzahl von Nuten mit einem jeweiligen Nutenboden aufweist. Zudem umfasst das Bereitstellen einer Motorwicklung, welche zumindest einen ersten Strang aufweisen. Dabei wird dem ersten Strang eine vorbestimmte Anzahl von ersten Nuten der Mehrzahl von Nuten zugeordnet. Darüber hinaus wird jeweils zumindest ein Windungsabschnitt des ersten Strangs in jede der ersten Nuten eingebracht, wobei der erste Strang eine Mehrzahl von elektrisch parallel geschalteten Einzeldrähten aufweist, welche jeweils als Runddraht ausgebildet sind, und zumindest einige der Einzeldrähte in jedem der Windungsabschnitte in radialer Richtung des Stators übereinander angeordnet sind. Dabei werden die Windungsabschnitte jeweils derart in den ersten Nuten angeordnet, dass ein mittlerer radialer Abstand der Einzeldrähte zu dem Nutboden für alle Einzeldrähte gleich ist.

Wie zuvor erwähnt kann die Motorwicklung mittels einer Handwicklung hergestellt werden. Dabei kann es beispielsweise vorgesehen sein, dass zunächst ein erster Teil der Spule, der beispielsweise mehrere Windungen aufweisen kann, in eine der ersten Nuten eingelegt wird. Danach können alle Windungen der noch nicht eingelegten Windungen um 180° in dem Verdrehbereich gedreht werden. Anschließend können diese Windungen in die nächste erste Nut eingelegt werden. Dabei können die einzelnen Windungen Zug um Zug in die nächste erste Nut eingelegt werden. Diese Schritte können für alle Spulen je Strang und Pol wiederholt werden.

Alternativ dazu kann die Maschinenwicklung mit Hilfe einer Wickelmaschine bzw. Serienwickelmaschine hergestellt werden. Diese Wickelmaschine kann beispielsweise eine Einziehvorrichtung aufweisen. Zudem kann die Wickelmaschine einen Wickler und eine Spulenform aufweisen, welche die tatsächliche Form der Spule wiedergibt. Ferner kann die Wickelmaschine entsprechende Einziehstäbe aufweisen, auf denen die jeweiligen Spulen nach dem Wickeln abgelegt werden. Dabei kann es insbesondere vorgesehen sein, dass die Einzeldrähte dem Wickler über eine entsprechende Drahtführung zugeführt werden. Diese Drahtführung kann entsprechende Durchgangsöffnungen aufweisen, durch die die Einzeldrähte geführt werden. Zudem kann die Drahtführung insbesondere so ausgebildet sein, dass diese um 180° gedreht werden kann. Auf diese Weise wird es beispielsweise ermöglicht, dass zunächst eine erste Spule gewickelt wird und im Übergang zur darauffolgenden verketteten Spule die Position der parallelen Einzeldrähte innerhalb der Windung um 180° getauscht wird. Somit kann die Maschinenwicklung auf einfache und kostengünstige Weise gefertigt werden.

Die mit Bezug auf den erfindungsgemäßen Stator vorgestellten bevorzugten Ausführungsformen und deren Vorteile gelten entsprechend für die erfindungsgemäße elektrische Maschine sowie für das erfindungsgemäße Verfahren.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert. Dabei zeigen:
- FIG 1: eine ausschnittsweise Darstellung einer elektrischen Maschine gemäß dem Stand der Technik, wobei die elektrische Maschine einen Stator mit einer Mehrzahl von Nuten aufweist, in welche jeweils Einzeldrähte eingebracht sind;
- FIG 2: ein Diagramm, welches einen Verlauf der magnetischen Flussdichte in der Nut beschreibt;
- FIG 3: eine ausschnittsweise Darstellung einer elektrischen Maschine gemäß einer ersten Ausführungsform der vorliegenden Erfindung;
- FIG 4: eine ausschnittsweise Darstellung einer elektrischen Maschine gemäß einer weiteren Ausführungsform der vorliegenden Erfindung;
- FIG 5: eine vergrößerte Ansicht von FIG 4;
- FIG 6: ein Wickelschaltbild der elektrischen Maschine gemäß FIG 4;
- FIG 7: ein Wickelschaltbild einer elektrischen Maschine gemäß einer weiteren Ausführungsform; und
- FIG 8: ein Wickelschaltbild einer elektrischen gemäß einer weiteren Ausführungsform.

In den Figuren werden gleiche und funktionsgleiche Elemente mit den gleichen Bezugszeichen versehen.

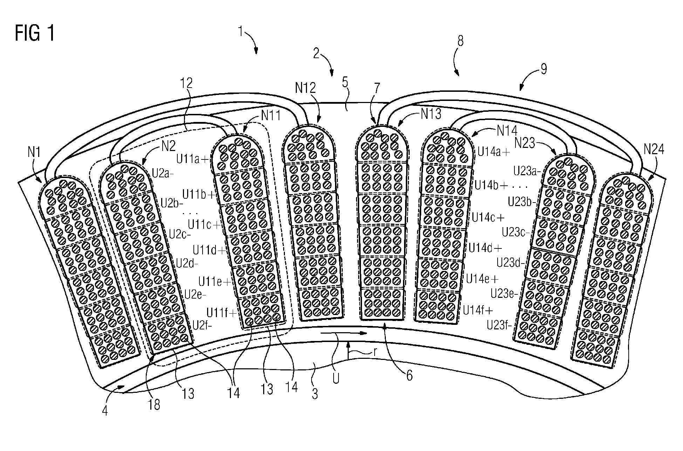

FIG 1 zeigt eine ausschnittsweise Darstellung einer elektrischen Maschine 1 gemäß dem Stand der Technik in einer geschnittenen Seitenansicht. Die elektrische Maschine 1 umfasst einen Stator 2. Darüber hinaus umfasst die elektrische Maschine einen Rotor 3, der innerhalb des Stators 2 angeordnet ist. Zwischen dem Stator 2 und dem Rotor 3 ist ein Luftspalt 4 ausgebildet.

Der Stator 2 umfasst einen Statorträger 5 bzw. ein Blechpaket, in welches eine Mehrzahl von Nuten N1 bis N48 eingebracht sind. In dem vorliegenden Ausführungsbeispiel umfasst der Stator 2 48 Nuten N1 bis N48, wobei vorliegend nur die Nuten N1, N2, N11, N12, N13, N14, N23 und N24 dargestellt sind. Jede der Nuten N1 bis N48 umfasst einen Nutboden 6, der dem Bereich der jeweiligen Nuten N1 bis N48 entspricht, der dem Rotor 3 bzw. dem Luftspalt 4 zugewandt ist. Darüber hinaus umfasst jede der Nuten N1 bis N48 eine Nutöffnung 7, die dem Nutboden 6 gegenüberliegt. Die jeweiligen Nuten N1 bis N48 erstrecken sich entlang einer radialen Richtung r der elektrischen Maschine 1 bzw. des Stators 2. Zudem sind die Nuten N1 bis N48 entlang einer Umfangsrichtung U des Stators 2 gleichmäßig verteilt nebeneinander angeordnet.

Des Weiteren umfasst der Stator 2 eine Motorwicklung 8, die mehrere Stränge 9, 10, 11 aufweisen kann. Vorliegend ist ein erster Strang 9 der Motorwicklung 8 dargestellt. Wie nachfolgend näher erläutert, sind dem ersten Strang erste Nuten der Mehrzahl von Nuten N1 bis N48 zugeordnet. Der erste Strang 9 ist dabei derart gewickelt, dass dieser mehrere Spulen 12 aufweist. Vorliegend ist eine Spule 12 an den Nuten N2 und N11 ausgebildet. Die Spule 12 umfasst eine Mehrzahl von Windungen 18, die in radialer Richtung r hintereinander bzw. übereinander angeordnet sind. In dem vorliegenden Ausführungsbeispiel umfasst die Spule 12 sechs Windungen 18. In Nuten N1 bis N48 ist jeweils ein Windungsabschnitt 13 der Windungen angeordnet. Vorliegend sind einige der Windungsabschnitte 13 bezeichnet. Beispielsweise ist der unterste Windungsabschnitt 13 in der Nut N11 als "U11f+" bezeichnet. Dabei bezeichnet "U" die Phase bzw. den Strang 9, 10, 11. Die Zahl "11" beschreibt die Nut N11, in der der Windungsabschnitt 13 angeordnet ist. Der Buchstabe "f" beschreibt die Position des Windungsabschnitts 13 innerhalb der Spule 12. Schließlich bezeichnet "+" die Polarität des Windungsabschnitts 13.

Der erste Strang 8 umfasst eine Mehrzahl von Einzeldrähten 14, die als Runddrähte ausgebildet sind. Somit umfasst auch jeder der Windungsabschnitte 13 eine Mehrzahl von Einzeldrähten 14. Vorliegend umfasst jeder Windungsabschnitt 13 zwölf Einzeldrähte 14. Dabei sind jeweils vier Einzeldrähte 14 in Umfangsrichtung U nebeneinander angeordnet und jeweils drei Einzeldrähte 14 sind in radialer Richtung r übereinander angeordnet. Zudem ist die Anordnung der jeweiligen Einzeldrähte in den Windungsabschnitten 13 gleich. Im Betrieb der elektrischen Maschine 1 können in Folge der elektrischen Felder mit einer Frequenz größer null elektrische Spannungen in die Einzeldrähte 14 induziert werden. Dadurch, dass die jeweiligen Einzeldrähte 14 in der Nut N1 bis N48 einen unterschiedlichen Abstand in radialer Richtung r zu dem Stator 3 aufweisen und die elektromagnetischen Felder örtlich in der jeweiligen Nut N1 bis N48 unterschiedlich sind, unterscheidet sich die jeweilige induzierte Spannung. Dieser Unterschied führt zu Ausgleichströmen der zu Verlusten und im schlimmsten Fall zu einer Beschädigung der Einzeldrähte 14 führen kann.

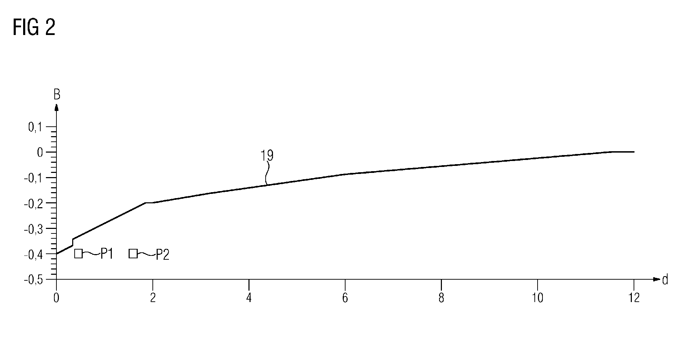

Hierzu zeigt FIG 2 ein Diagramm, welches den Verlauf der magnetischen Flussdichte B in einer der Nuten N1 bis N48 beschreibt. Auf der Abszisse ist ein Abstand d in mm entlang der radialen Richtung r aufgetragen. Auf der Ordinate ist die magnetische Flussdichte B in T aufgetragen. Die Kurve 19 beschreibt die Normalkomponente der magnetischen Flussdichte B entlang einer virtuellen Linie, die radial in der Nut N1 bis N48 liegt. Die beiden Punkte P1 und P2 bzw. Marker beschreiben die Positionen der Mittelpunkte von zwei Einzeldrähten 14. Die magnetische Flussdichte B weist innerhalb der Nut N1 bis N48 einen nicht linearen Verlauf auf. Damit ist das Nutquerfeld in radialer Richtung r der Nut N1 bis N48 nicht konstant. Durch die unterschiedlichen magnetischen Flussdichten B, führen zu unterschiedlichen elektrischen Spannungen, die in die Einzeldrähte induziert werden. Die Folge sind Ausgleichsströme innerhalb der Motorwicklung 8.

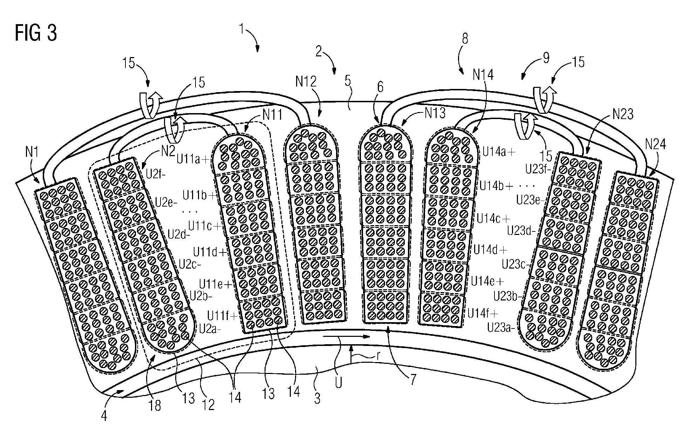

FIG 3 zeigt eine ausschnittsweise Darstellung einer elektrischen Maschine 1 gemäß einer ersten Ausführungsform der vorliegenden Erfindung. Hierbei weist der erste Strang 9 bzw. die Windung zumindest einen Verdrehbereich 15 auf, in welchem der erste Strang 9 in sich um 180° gedreht ist. In dem vorliegenden Ausführungsbeispiel weist der erste Strang 9 vier dargestellte Verdrehbereiche 15 auf. Dabei sind die Verdrehbereiche 15 innerhalb einer Spule 12 angeordnet. In der Spule 12, bei denen die Windungen 18 in die Nuten N2 und N11 eingebracht sind, ist vorliegend eine Verdrehung vorgesehen. Dabei entsprechen die einzelnen Windungsabschnitte 13 in der Spule 12 denen gemäß FIG 1. Bei dem Übergang von der Nut N11 auf die Nut N2 werden alle Windungen 18 um 180° gedreht. Dies führt dazu, dass in der Nut N2 die Windungsabschnitte 13 und somit auch die Einzeldrähte 14 im Vergleich zur Nut N11 in entgegengesetzter Richtung angeordnet sind. Bei der Herstellung, die beispielsweise mittels einer Handwicklung erfolgen kann, kann zunächst der erste Teil der Spule 12, der die sechs Wicklungsabschnitte 13 umfasst, in die Nut N11 eingelegt werden. Danach können alle noch nicht eingelegten Windungen 18 um 180° gedreht werden und anschließend in die Nut N2 eingelegt werden. Das gleiche Vorgehen wurde für die Spule 12 durchgeführt, die den Nuten N1 und N12 zugeordnet ist. Zudem ergibt sich die gleiche Anordnung für die Spule 12, die den Nuten N13 und N24 zugeordnet ist sowie für die Spule 12, die den Nuten N14 und N23 zugeordnet ist.

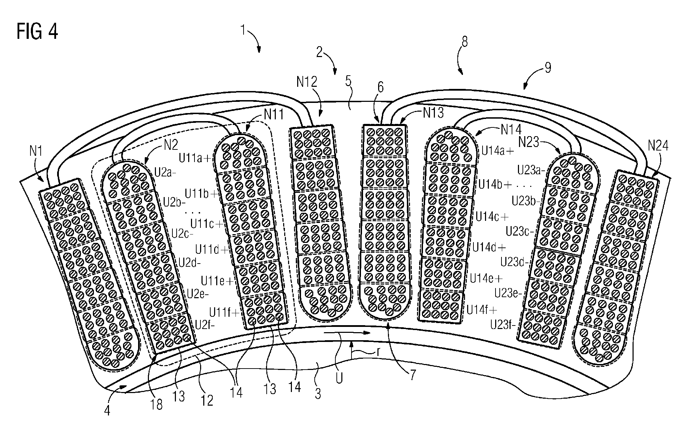

FIG 4 zeigt eine ausschnittsweise Darstellung einer elektrischen Maschine 1 gemäß einer weiteren Ausführungsform der vorliegenden Erfindung. Hierbei entspricht die Spule 12, die die Nuten N2 und N11 umfasst der Spule 12 gemäß FIG 1. Die mit dieser Spule 12 verkettete Spule 12, die die Nuten N1 und N12 umfasst, ist derart ausgebildet, dass die Windungsabschnitte 13 in umgekehrter Richtung in den jeweiligen Nuten N1, N12 angeordnet sind. Hierbei kann bei der Herstellung der Motorwicklung 8 zunächst die Spule, die die Nuten N2 und N11 umfasst, gewickelt werden. Bei dem Übergang zur darauffolgenden verketteten Spule 12, die die Nuten N1 und N12 umfasst, können die parallelen Einzeldrähte 14 innerhalb einer Windung um 180° gedreht werden. Dies eignet sich insbesondere, wenn die Maschinenwicklung 8 mit einer entsprechenden Wickelmaschine gewickelt wird. Die gleiche Anordnung ergibt sich für die Spule 12, die die Nuten N14 und N23 umfasst und die Spule 12, die die Nuten N13 und N24 umfasst.

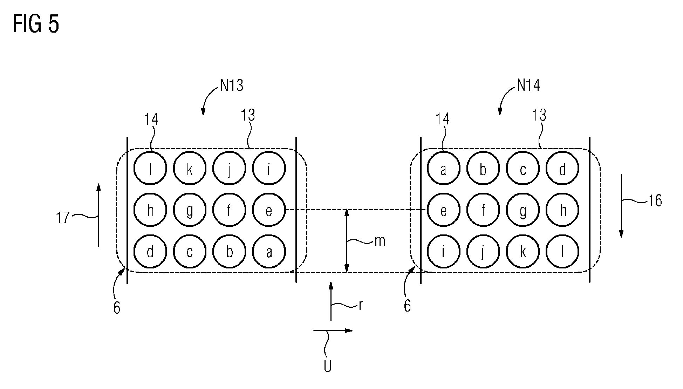

Grundsätzlich können die Windungsabschnitte 13, die den ersten Nuten für den ersten Strang 9 zugeordnet sind, in zwei Gruppen eingeteilt werden. Dabei können die Einzeldrähte 14 bei den Windungsabschnitten 13 in der ersten Gruppe in radialer Richtung r gemäß einer ersten Reihenfolge 16 angeordnet sein. Bei den Windungsabschnitten 13, die der zweiten Gruppe zugeordnet sind, können die Einzeldrähte 14 in radialer Richtung in einer zur ersten Reihenfolge 16 umgekehrten, zweiten Reihenfolge 17 angeordnet sein. Dies ist vorliegend anhand von FIG 5 verdeutlicht, welche eine vergrößerte Darstellung von FIG 4 zeigt. Dabei sind die Windungsabschnitte 13 in der Nut N14 der ersten Gruppe zugeordnet. Die Windungsabschnitte 13 der Nut N13 sind der zweiten Gruppe zugeordnet. In der Nut N14 sind die Einzeldrähte 14, die vorliegend mit den Buchstaben a bis l bezeichnet sind, in der ersten Reihenfolge 16 in radialer Richtung r angeordnet. Dabei sind der ersten und der zweiten Gruppe bevorzugt die gleiche Anzahl von Windungsabschnitten 13 zugeordnet.

Vorliegend werden beispielhaft die Einzeldrähte 14, die mit a, e und i bezeichnet sind, betrachtet. Bei der Nut N14 sind diese in radialer Richtung r entlang der ersten Richtung 16 angeordnet. Dabei ist der Einzeldraht 14, der mit e bezeichnet ist, in der Mitte angeordnet. Der Einzeldraht 14, der mit i bezeichnet wird, ist am nächsten zu dem Nutboden 6 und somit zu dem Rotor 3 angeordnet. Der Einzeldraht 14, der mit a bezeichnet ist, ist von diesen Einzeldrähten 14 am weitesten von dem Nutboden 6 entfernt. Bei der Nut N13 sind diese Einzeldrähte, die mit a, e und i bezeichnet sind, in der zweiten, entgegengesetzten Richtung 17 angeordnet. Hier ist der Einzeldraht 14, der mit a bezeichnet ist, am nächsten zu dem Nutboden 6 angeordnet. Der Einzeldraht 14, der mit e bezeichnet ist, ist wiederum in der Mitte angeordnet. Der Einzeldraht 14, der mit i bezeichnet ist, weist den größten Abstand dieser Einzeldrähte 14 zu dem Nutboden 6 auf. Durch diese zwei unterschiedlichen Anordnungen bzw. die Anordnung entlang der ersten Reihenfolge 16 und der zweiten Reihenfolge 17 ergibt sich im Mittel für alle Einzeldrähte 14 in einem Windungsabschnitt 13 der gleiche mittlere Abstand m in radialer Richtung zu dem Nutboden 6. Damit kann bewirkt werden, dass in Summe die gleiche Spannung in die Einzeldrähte 14 induziert wird. Somit kann verhindert werden, dass sich Ausgleichströme innerhalb der Einzeldrähte 14 ausbilden.

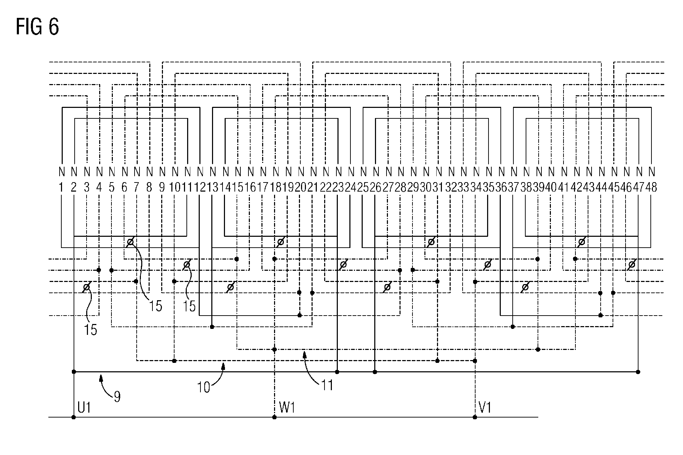

FIG 6 zeigt ein Wickelschaltbild der elektrischen Maschine 1 gemäß FIG 4. Dabei beschreiben die durchgezogenen Linien den ersten Strang 9, die gestrichelten Linien beschreiben den zweiten Strang 10 und die Strichpunktlinien beschreiben den dritten Strang 11. Dabei sind als erste Nut die Nuten N1, N2, N11, N12, N13, N14, N23, N24, N25, N26, N35, N36, N37, N38, N47 und N48 dem ersten Strang 9 zugeordnet. Die weitere Zuordnung der Nuten N1 bis N48 zu den Strängen 10 und 11 ist dem Wickelschaltbild zu entnehmen. Vorliegend weist jeder Strang 9, 10, 11 vier parallele Zweige auf. Grundsätzlich ist es vorgesehen, dass jeder der Stränge 9, 10, 11 pro parallelem Zweig einen Verdrehbereich 15 aufweist, in dem de erste Strang in sich um 180° gedreht ist. Dabei ist jedem der Stränge 9, 10, 11 eine Phase zugeordnet.

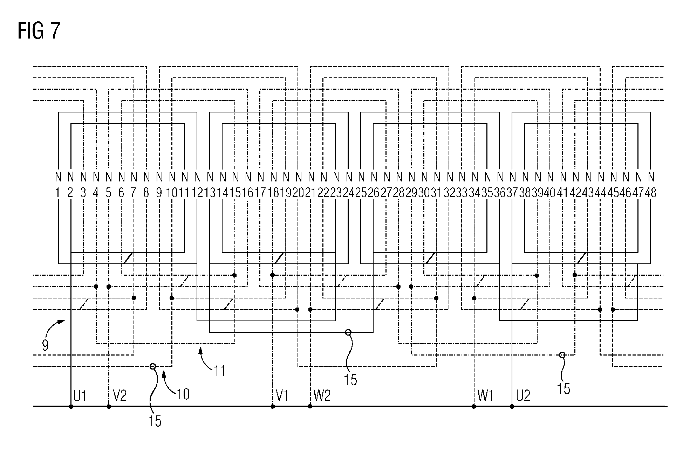

Im Vergleich hierzu zeigt FIG 7 ein Wickelschaltbild einer elektrischen Maschine 1 gemäß einer weiteren Ausführungsform. Im Vergleich zu FIG 6 weist jeder der Stränge 9, 10, 11 nur einen parallelen Zweig auf. Hierbei ist in jedem der Stränge 9, 10, 11 ein Verdrehbereich 15 vorgesehen.

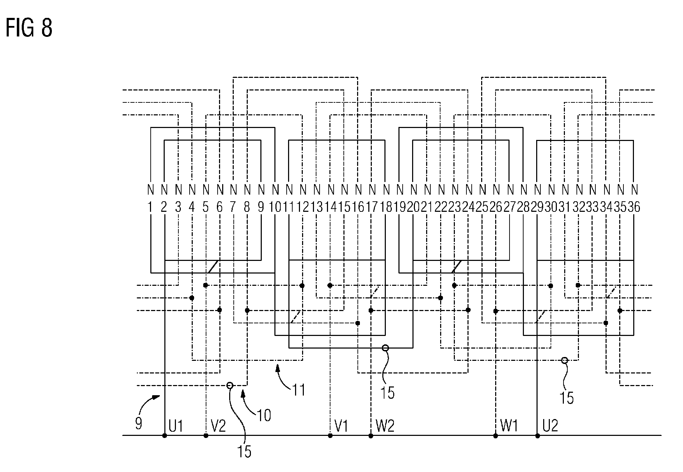

FIG 8 zeigt ein Wickelschaltbild einer elektrischen Maschine 1 gemäß einer weiteren Ausführungsform. Hierbei ist die elektrische Maschine 1 mit 36 Nuten N1 bis N36 ausgebildet. Auch hier weist jeder der Stränge 9, 10, 11 einen Zweig auf. In jedem der Stränge 9, 10, 11 ist ein Verdrehbereich 15 vorgesehen. Bei dem Beispiel von FIG 7 weist die elektrische Maschine 1 eine gerade Lochzahl von 4 auf. Die Lochzahl entspricht der Anzahl von Nuten N1 bis N48 pro Strang und Polpaarzahl. Bei der Ausführungsform gemäß FIG 8 ist die Lochzahl 3 und somit ungerade.

## Patentansprüche

1. Stator (2) für eine elektrische Maschine (1) mit
- einem Statorträger (5), welcher eine Mehrzahl von Nuten (N1 bis N48) mit einem jeweiligen Nutboden (6) aufweist, und
- einer Motorwicklung (8), welche zumindest einen ersten Strang (9) aufweist, wobei
- dem ersten Strang (9) eine vorbestimme Anzahl von ersten Nuten der Mehrzahl von Nuten (N1 bis N48) zugeordnet ist,
- jeweils zumindest ein Windungsabschnitt (13) des ersten Strangs (9) in jede der ersten Nuten eingebracht ist,
- der erste Strang (9) eine Mehrzahl von elektrisch parallel geschalteten Einzeldrähten (14) aufweist, welche jeweils als Runddraht ausgebildet sind, und
- zumindest einige der Einzeldrähte (14) in jedem der Windungsabschnitte (13) in radialer Richtung (r) des Stators (2) übereinander angeordnet sind,
**dadurch gekennzeichnet, dass**
- die Windungsabschnitte (13) jeweils derart in den ersten Nuten angeordnet sind, dass ein mittlere radialer Abstand (m) der Einzeldrähte (14) zu dem Nutboden (6) für alle Einzeldrähte (14) gleich ist.

2. Stator (2) nach Anspruch 1, **dadurch gekennzeichnet, dass** die jeweiligen Windungsabschnitte (13) in den ersten Nuten in eine erste Gruppe und eine zweite Gruppe eingeteilt sind, die Einzeldrähte (14) der Windungsabschnitte (13) der ersten Gruppe in einer ersten Reihenfolge (16) in der radialen Richtung (r) angeordnet sind und die Einzeldrähte (14) der Windungsabschnitte (13) der zweiten Gruppe in einer zur ersten Reihenfolge (16) umgekehrten, zweiten Reihenfolge (17) angeordnet sind.

3. Stator (2) nach Anspruch 1, **dadurch gekennzeichnet, dass** der erste Strang (9) zumindest einen Verdrehbereich (15) aufweist, an welchem der erste Strang (9) in sich um 180° gedreht ist.

4. Stator (2) nach Anspruch 3, **dadurch gekennzeichnet, dass** der erste Strang (8) eine Wicklung mit einem Wickelkopf ausbildet und der Verdrehbereich (15) innerhalb des Wickelkopfes angeordnet ist.

5. Stator (2) nach Anspruch 3 oder 4, **dadurch gekennzeichnet, dass** der erste Strang (9) zumindest zwei elektrisch parallele Zweige aufweist und der ersten Strang (9) in jedem der Zweige einen Verdrehbereich (15) aufweist.

6. Stator (2) nach einem der Ansprüche 3 bis 5, **dadurch gekennzeichnet, dass** der erste Strang (9) eine Mehrzahl von Spulen (12) aufweist, wobei jede der Spulen (12) zumindest eine Windung (18) aufweist, welche zwischen zwei der ersten Nuten ausgebildet ist und der Verdrehbereich (15) innerhalb zumindest einer Spule (12) der Mehrzahl von Spulen (12) angeordnet ist.

7. Stator (2) nach einem der Ansprüche 3 bis 5, **dadurch gekennzeichnet, dass** der erste Strang (9) eine Mehrzahl von Spulen (12) aufweist, wobei jede der Spulen (12) zumindest eine Windung (18) aufweist, welche zwischen zwei der ersten Nuten ausgebildet ist und der Verdrehbereich (15) zumindest zwischen zwei benachbarten Spulen (12) der Mehrzahl von Spulen (12) angeordnet ist.

8. Stator (2) nach Anspruch 6 oder 7, **dadurch ge-kennzeichnet**, dass jeder der Spulen (12) eine Mehrzahl von Windungen (18) aufweist, die in der radialen Richtung (r) übereinander angeordnet sind.

9. Stator (2) nach einem der vorhergehenden Ansprüche, **dadurch gekennzeichnet, dass** die Motorwicklung (8) einen zweiten Strang (10), welchem eine vorbestimmte Anzahl von zweiten Nuten der Mehrzahl von Nuten (N1 bis N48) zugeordnet ist, und einen dritten Strang (11), welchem eine vorbestimmet Anzahl von dritten Nuten der Mehrzahl von Nuten (N1 bis N48) zugeordnet ist, aufweist.

10. Elektrische Maschine (1) mit einem Stator (2) nach einem der vorhergehenden Ansprüche und mit einem Rotor (3).

11. Verfahren zum Herstellen eines Stators (2) einer elektrischen Maschine durch:
- Bereitstellen eines Statorträgers (5), welcher eine Mehrzahl von Nuten (N1 bis N48) mit einem jeweiligen Nutboden (6) aufweist,
- Bereitstellen einer Motorwicklung (8), welche zumindest einen ersten Strang (9) aufweist, wobei
- dem ersten Strang (9) eine vorbestimme Anzahl von ersten Nuten der Mehrzahl von Nuten (N1 bis N48) zugeordnet wird,
- jeweils zumindest ein Windungsabschnitt (13) des ersten Strangs (9) in jede der ersten Nuten eingebracht wird, wobei der erste Strang (9) eine Mehrzahl von elektrisch parallel geschalteten Einzeldrähten (14) aufweist, welche jeweils als Runddraht ausgebildet sind, und zumindest einige der Einzeldrähte (14) in jedem der Windungsabschnitte (13) in radialer Richtung (r) des Stators (2) übereinander angeordnet sind,
**dadurch gekennzeichnet, dass**
- die Windungsabschnitte (13) jeweils derart in den ersten Nuten angeordnet werden, dass ein mittlere radialer Abstand (m) der Einzeldrähte (14) zu dem Nutboden (6) für alle Einzeldrähte (14) gleich ist.
